Europäisches Patentamt

European Patent Office

Office européen des brevets

(11) Veröffentlichungsnummer: **0 058 833**
**B1**

## (12) EUROPÄISCHE PATENTSCHRIFT

(45) Veröffentlichungstag der Patentschrift:
01.08.84

(21) Anmeldenummer: **82100551.9**

(22) Anmeldetag: **27.01.82**

(51) Int. Cl.³: **B 61 H 15/00, F 16 D 65/66**

(54) Selbsttätige Nachstellvorrichtung für den Anlegehub von Bremsgestängen von insbesondere Schienenfahrzeugen.

(30) Priorität: **19.02.81 DE 3106178**

(43) Veröffentlichungstag der Anmeldung:
**01.09.82 Patentblatt 82/35**

(45) Bekanntmachung des Hinweises auf die Patenterteilung:
**01.08.84 Patentblatt 84/31**

(84) Benannte Vertragsstaaten:
**AT BE CH DE FR GB IT LI NL SE**

(56) Entgegenhaltungen:
**DE - A - 2 337 420**
**DE - A - 2 805 116**
**DE - A - 2 835 305**
**GB - A - 1 397 360**
**US - A - 3 326 335**
**US - A - 3 900 086**

(73) Patentinhaber: **Knorr-Bremse GmbH, Moosacher Strasse 80, D-8000 München 40 (DE)**

(72) Erfinder: **Nadas, Julius, Trezzanostrasse 13, D-8057 Eching (DE)**
Erfinder: **Sander, Nils Börje Lennart, Torpslingan 3, S-28300 Osby (SE)**

**Beschreibung**

Die Erfindung bezieht sich auf eine selbsttätige Nachstellvorrichtung für den Anlegehub von Bremsgestängen von insbesondere Schienenfahrzeugen, mit zwei mittels einer Verschraubung teleskopartig relativ zueinander verstellbaren, undrehbar gehaltenen Gestängeteilen, von denen wenigstens das eine rohrartig ausgebildet und mit einem eine Bremskraft abgebenden Bremskraftmotor, gegebenenfalls Bremszylinder, und von denen das andere mit zu den Bremsorganen führenden Gestängeteilen gekoppelt ist, wobei die Verschraubung zwei Verschraubungsteile, bestehend aus einer auf einer Gewindespindel mittels eines nicht selbsthemmenden Gewindes verschraubten Mutter, aufweist, von denen das eine Verschraubungsteil drehbar und mit Ausnahme von Kupplungsschalthüben axial unverschieblich im rohrartigen einen Gestängeteil gehalten und von denen das andere Verschraubungsteil undrehbar gehalten und fest mit dem anderen Gestängeteil verbunden ist, mit einer im Lösezustand ein dem Anlegehub entsprechendes Spiel aufweisenden Anschlagvorrichtung, die ein in deren zur Bremskraftrichtung gleichgerichteten Schliessrichtung von einer Feder belastetes, verschiebliches Anschlagteil aufweist, mit einer in geschlossenem Zustand das drehbare Verschraubungsteil undrehbar mit dem einen Gestängeteil kuppelnden Steuerkupplung, die zumindest bei Belastung durch ein Drehmoment in Öffnungsrichtung von einer im Vergleich zu der der Anschlagvorrichtung zugehörenden Feder schwachen Öffnungskraft belastet ist, und die ein von der das Anschlagteil in seiner Schliessrichtung belastendes Steuerorgan aufweist, mit einer entgegengesetzt zur Steuerkupplung schaltbaren, die Bremskraft übertragenden Drehkupplung zwischen dem einen Gestängeteil und dem drehbaren Verschraubungsteil, und mit einer zwischen den beiden Gestängeteilen eingespannten, das eine Gestängeteil entgegen der Bremskraftrichtung belastenden Vorspannfeder.

Eine den vorstehend genannten Merkmalen entsprechende Nachstellvorrichtung ist in der US-A Nr. 3326335 dargestellt und beschrieben. Das drehbare, hierbei als Gewindespindel ausgebildete Verschraubungsteil weist an seinem einen Ende einen Ringflansch auf, der beiderseits Konuskupplungsflächen trägt: Die in Bremskraftrichtung weisende Konuskupplungsfläche des Ringflansches bildet zusammen mit einer entsprechenden Kupplungsfläche am einen Gestängeteil die Steuerkupplung, welche in Öffnungsrichtung von einer schwachen, zwischen dem einen Gestängeteil und der Gewindespindel über ein Axiallager eingespannten Feder belastet ist, und die andere, der Bremskraftrichtung abgewandte Konuskupplungsfläche des Ringflansches bildet mit einer ebenfalls am einen Gestängeteil angeordneten Gegenfläche die entgegengesetzt zur Steuerkupplung schliessbare, die Bremskraft übertragende Drehkupplung. Die zwischen den beiden Gestängeteilen eingespannte Vorspannfeder belastet bei dieser bekannten, für den Einbau in ein Bremsgestänge unter Belastung durch die Bremskraft in Zugrichtung ausgebildeten Nachstellvorrichtung die Steuerkupplung in deren Schliessrichtung; hieraus resultiert, dass bei Bremsungen mit dem den Sollanlegehub übersteigenden Bremsanlegehub nach Schliessen der Anschlagvorrichtung, welches nach Zurücklegen des Sollanlegehubes erfolgt, die Steuerkupplung zwar von der Kraft der der Anschlagvorrichtung zugehörenden Feder entlastet wird, jedoch weiterhin unter der Kraft der Vorspannfeder geschlossen bleibt. Die Steuerkupplung wird erst beim tatsächlichen Anlegen der Bremsen nach Zurücklegen des übermässigen Anlegehubes geöffnet, und ohne irgendwelche Gestängenachstellbewegung wird sofort anschliessend die die Bremskraft übertragende Kupplung geschlossen; die die Bremsen fest zuspannende Bremskraft wird sodann über diese geschlossene Kupplung übertragen. Während des ganzen Anlege- und Festspannhubes für die Bremsen erfolgt bei dieser Nachstellvorrichtung also keine Nachstellung des übermässigen Anlegehubes; erst während des nachfolgenden Bremsenlösens erfolgt diese Nachstellung durch Reduzierung des übermässigen Anlegehubes auf den Sollwert. Dies kann jedoch zu einem Bremsenausfall führen, wenn der Überhub für den Anlegehub derart gross ist, dass der maximal vom Bremskraftmotor ausübbare Hub überschritten wird, wie es beispielsweise nach dem Verlust einer Bremsbacke bzw. eines Bremsklotzes an der Bremse, durch unsachgemässe Rückstellung der Nachstellvorrichtung nach einem Wechsel verschlissener gegen neue Bremsbeläge oder durch die Nachstellvorrichtung unbeabsichtigt verstellende Fahrerschütterungen auftreten kann. Es ist noch anzumerken, dass bei dieser bekannten Nachstellvorrichtung der Bremshub nach dem Schliessen der Anschlagvorrichtung entgegen der Kraft der dieser Anschlagvorrichtung zugehörenden Feder erfolgt, diese Feder aber unabhängig von der Stärke der Vorspannfeder bemessbar ist und somit nicht übermässig stark ausgelegt werden muss.

Bei einer anderen, vorzugsweise für den Einbau in einen Bremszylinder vorgesehenen Nachstellvorrichtung nach DE-A Nr. 2805116, welche mit Ausnahme der Anordnung der Anschlagvorrichtung ebenfalls den eingangs genannten Merkmalen entspricht, ist eine Nachstellung eines übermässigen Anlegehubes während des Bremsenanlegevorganges wenigstens bis zu einem bestimmten Grenzwert vorgesehen, diesen Grenzwert übersteigende Überhübe werden allerdings erst nachfolgend beim Bremsenlösen nachgestellt. Die einen Federspeicher auf dem drehbaren Verschraubungsteil aufweisende Anschlagvorrichtung belastet hierbei nur nach Überschreiten des Sollanlegehubes die Steuerkupplung in Öffnungsrichtung. Während Bremsungen mit übermässig grossem Anlegehub muss bei Erreichen des Sollaulegehubes die der Anschlagvorrichtung zugehörende Feder das drehbare Verschraubungsteil mitsamt dem anderen Gestängeteil entgegen der Kraft der Vorspannfeder bis zum Öffnen der Steuerkupplung zurückhalten; anschliessend kann eine Nachstellbewegung erfolgen, bis das eine Gestängeteil einen geringen, zum Schliessen der die Bremskraft übertragenden Kupplung ausreichenden, weiteren Hub ausgeführt hat. Diese kurze, für die Nachstellung zur Verfügung stehende Zeitspanne in Verbindung mit der Abstimmung der Federkräfte begrenzt die Überhubnachstellung während des Bremsenanlegens; restlicher Überhub kann erst beim nachfolgenden Bremsenlösen nachgestellt werden. Aus der Funktion dieser Nachstellvorrichtung ist ersichtlich, dass die der Anschlagvorrichtung zugehörende Feder stärker als die Vorspannfeder, diese wiederum stärker als die durch eine weitere Feder realisierte, schwache Öffnungskraft für die Steuerkupplung bemessen sein muss. Die der Anschlagvorrichtung zugehörende Feder muss also relativ kräftig ausgebildet werden und nimmt daher während Bremsungen einen beachtlichen Anteil der vom Bremskraftmotor ausgeübten Bremskraft auf, wodurch die Zuspannkraft für die Bremsen merklich gemindert wird; die Nachstellvorrichtung weist also zusätzlich zur nur teilweisen Nachstellung eines Überhubes während des Bremsenanlegens einen nur niedrigen Wirkungsgrad auf.

Für von den eingangs genannten Merkmalen völlig abweichende Nachstellvorrichtungen ist es beispielsweise gemäss der GB-A Nr. 1397360 bekannt, für eine Drehkupplung ein an einem Teil axial verschieblich geführtes, federbelastetes Steuerteil vorzusehen.

Mit der DE-A Nr. 2337420 ist für ebenfalls von den eingangs genannten Merkmalen abweichende Nachstellvorrichtungen bekannt geworden, wie Nachstellvorrichtungen, welche beispielsweise entsprechend der in der genannten DE-A Nr. 2805116 dargestellten Nachstellvorrichtung mit einer in Druckrichtung wirkenden Bremskraft belastet sind, in Nachstellvorrichtungen umbaubar sind, welche beispielsweise entsprechend der Nachstellvorrichtung nach der ebenfalls bereits genannten US-A Nr. 3326335 von einer in Zugkraftrichtung wirkenden Bremskraft belastet werden.

Es ist Aufgabe der Erfindung, eine Nachstellvorrichtung der eingangs genannten Art zu schaffen, welche bei einfachem Aufbau und betriebssicherer Funktionsweise eine vollständige Nachstellung eines übermässigen Anlegehubes auf den Sollanlegehub beim Bremsenanlegen gewährleistet, und welche zudem einen hohen Wirkungsgrad aufweist, so dass die Nachstellvorrichtung nur einen geringen Anteil der vom Bremskraftmotor aufgebrachten Bremskraft für sich beansprucht, und die Bremsen somit mit nahezu der vollen, vom Bremskraftmotor ausübbaren Bremskraft zuspannbar sind.

Diese Aufgabe wird nach der Erfindung dadurch gelöst, dass bei einer Nachstellvorrichtung der eingangs genannten Art zumindest eine Teilkupplung der Steuerkupplung von der Vorspannkraft der Vorspannfeder entlastet angeordnet ist.

Durch diese Massnahme wird erreicht, dass beim Schliessen des Anschlages die Steuerkupplung unbelastet von der Vorspannfeder öffnen kann, und dass unabhängig von der Weiterbewegung des einen Gestängeteiles sowie unabhängig von Federabstimmungen eine Nachstellung des übermässigen Anlegehubes auf den Sollanlegehub erfolgen kann. Zugleich kann durch diese Massnahme die der Anschlagvorrichtung zugehörende Feder unabhängig von der Vorspannkraft der Vorspannfeder bemessen werden; sie kann daher relativ schwach sein und somit einen hohen Wirkungsgrad des Gestängestellers ermöglichen.

Nach der weiteren Erfindung kann es zweckmässig sein, wenn das drehbare Verschraubungsteil in Bremskraftrichtung über ein die Vorspannkraft der Vorspannfeder aufnehmendes Drehlager gegen das eine Gestängeteil abgestützt ist, wobei zweckmässig das Drehlager als gleichachsig zum drehbaren Verschraubungsteil und zum einen Gestängeteil zwischen diesen angeordnete Kugel ausgebildet sein kann. Durch diese Massnahmen wird in einfacher Weise eine direkte Übertragung der vom einen Gestängeteil über die Verschraubung auf das drehbare Verschraubungsteil eingeleiteten Vorspannkraft von letzterem auf das eine Gestängeteil erzielt.

Nach einem weiteren Merkmal der Erfindung ist es besonders zweckmässig, wenn, gegebenenfalls auch unabhängig von der vorstehend erwähnten, zweckmässigen Abstützung des drehbaren Verschraubungsteiles, zumindest die Teilkupplung der Steuerkupplung bei zumindest im wesentlichen konstanter, axialer Relativlage des einen Gestängeteiles und des drehbaren Verschraubungsteiles zueinander durch zu diesen Teilen relatives Verschieben zumindest eines Teiles des Steuerorganes vorzugsweise entgegen der Bremskraftrichtung zu öffnend angeordnet ist.

Die Steuerkupplung bzw. deren Teilkupplung kann dann zum erleichterten Erzielen eines Springeffektes für das Nachstellen eines zu grossen Anlegehubes beim Bremsenanlegen allein durch entsprechendes, leichtes Verschieben wenigstens eines Teiles des Steuerorganes relativ zu dem einen Gestängeteil und zu dem drehbaren Verschraubungsteil geöffnet werden, die beiden letztgenannten Teile behalten hierbei ihre relative Lage zueinander bei. Das Öffnen der Steuerkupplung bzw. deren Teilkupplung erfolgt somit ohne Kompression der Vorspannfeder und wird also durch deren Kraft auch nicht behindert. Bei den eingangs beschriebenen, bekannten Nachstellvorrichtungen, beispielsweise nach der US-A Nr. 3326335 oder DE-A Nr. 2805116, kann die Steuerkupplung nur durch Relativverschiebung des drehbaren Verschraubungsteiles gegen das eine Gestängeteil unter Spannen der Vorspannfeder und damit entgegen deren Kraft erfolgen.

Nach einem weiteren Merkmal der Erfindung ist es zweckmässig, wenn das Steuerorgan der Steuerkupplung von einer es mit Öffnungskraft belastenden Feder belastet ist. Abweichend hierzu kann aber auch die Steuerkupplung verzahnt, mit unter Drehmomentbelastung die Öffnungskraft erzeugenden schrägen Zahnflanken ausgebildet sein.

Nach der weiteren Erfindung ist eine konstruktiv vorteilhafte Ausbildung der Nachstellvorrichtung dadurch erreichbar, dass das Steuerorgan wenigstens ein gegebenenfalls von der es in Öffnungsrichtung belastenden Feder belastetes, über eine zweite Anschlagkupplung in Bremskraftrichtung mit dem Anschlagteil kuppelbares Steuerteil aufweist, das drehbar, aber axial unverschieblich mit einem Kupplungsteil kuppelbar ist, welches axial verschieblich, aber relativ undrehbar mit dem drehbaren Verschraubungsteil gekoppelt ist, und welches ein in Bremskraftrichtung weisendes, mit einem Gegenprofil am einen Gestängeteil die Steuerkupplung bildendes Kupplungsprofil aufweist. Dabei kann des weiteren das Steuerteil die radiale Wandung einer der Bremskraftrichtung abgewandten Einschnürung des einen Gestängeteils verschieblich durchsetzende, über dem Umfang des Gestängeteiles gleichmässig verteilt angeordnete Stössel aufweisen, die am der Bremskraftrichtung abgewandten Ende über die Anschlagkupplung an einem radial nach innen ragenden Ringflansch des hülsenartigen, auf dem Aussenumfang des einen Gestängeteiles verschieblich gelagerten Anschlagteiles anlegbar sind, und die andererseits radial einwärts ragende Ansätze aufweisen, an welchen das Kupplungsteil drehbar, zumindest entgegen der Bremskraftrichtung über ein Wälzlager, abgestützt ist, und wenn das ringartig ausgebildete Kupplungsteil über ein Schiebeprofil mit dem es durchsetzenden, drehbaren Verschraubungsteil verbunden ist, wobei der Verschiebehub des Kupplungsteiles in Bremskraftrichtung durch einen Anschlag am drehbaren Verschraubungsteil begrenzt ist. Abweichend von der vorstehend erläuterten Ausgestaltung kann nach der weiteren Erfindung eine vorteilhafte, bauliche Ausgestaltung der Nachstellvorrichtung auch dadurch erreicht werden, dass das Steuerorgan als ein das drehbare Verschraubungsteil umgebender Ringkörper ausgebildet ist, der undrehbar, aber axial verschieblich in einem Gestängeteil gelagert ist, und der ein in Bremskraftrichtung weisendes, mit einem ersten Gegenprofil an einem ringförmigen Zwischenteil eine erste Drehkupplung bildendes Kupplungsprofil aufweist, dass das Zwischenteil über ein Axiallager in Bremskraftrichtung gegen das eine Gestängeteil abgestützt ist, und dass das Zwischenteil ein zweites, der Bremskraftrichtung abgewandtes Gegenprofil aufweist, das zusammen mit einem Kupplungsprofil am drehbaren Verschraubungsteil eine zweite Drehkupplung bildet. Dabei kann weiterhin das das Zwischenteil abstützende Axiallager auf dem drehbaren Verschraubungsteil axial verschieblich gelagert sein, und das dem Zwischenteil abgewandte Lagerteil des Axiallagers in Bremskraftrichtung sowohl gegen einen Ringflansch des einen Gestängeteils als auch gegen einen am drehbaren Verschraubungsteil angeordneten Ringflansch anlegbar sein. Zum Dämpfen von durch das Bremsgestänge auf die Nachstellvorrichtung einwirkenden Stössen kann dabei zweckmässig der Ringflansch des Gestängeteiles in Bremskraftrichtung gefedert an einem Gestängeteil angeordnet sein.

In der Zeichnung sind unterschiedliche Ausführungsbeispiele für nach der Erfindung ausgebildete Nachstellvorrichtungen dargestellt, und zwar zeigt

Fig. 1 die Einordnung der Nachstellvorrichtung in eine Bremsanlage in schematischer Darstellung,

Fig. 2 ein erstes Ausführungsbeispiel der Nachstellvorrichtung im Schnitt,

Fig. 3 eine Einzelheit der Nachstellvorrichtung nach Fig. 2 in vergrössertem Massstab,

Fig. 4 eine zweite Ausführung der Nachstellvorrichtung, welche bis auf eine Vertauschung der beiden Verschraubungsteile im wesentlichen der Nachstellvorrichtung nach Fig. 2 entspricht,

Fig. 5 eine dritte Ausführungsform der Nachstellvorrichtung, und

Fig. 6 eine vierte Ausbildungsform der Nachstellvorrichtung, welche bis auf eine Vertauschung der Verschraubungsteile im wesentlichen der Nachstellvorrichtung nach Fig. 4 entspricht.

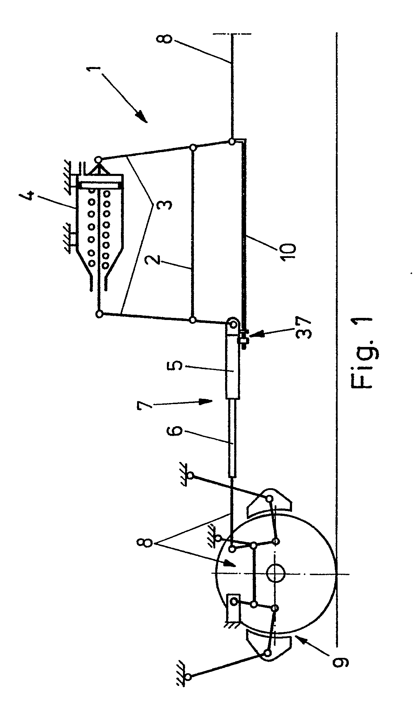

Die Bremsanlage weist gemäss Fig. 1 ein übliches H-Bremsgestänge 1 mit zwei durch eine Zugstange 2 miteinander verbundenen Bremshebeln 3 auf, zwischen deren einem Ende ein Bremszylinder 4 eingespannt ist. Das andere Ende des gemäss Fig. 1 linken Bremshebels 3 ist an einem Gestängeteil 5 angelenkt, welches zusammen mit einem weiteren, zu ihm teleskopisch verstellbaren Gestängeteil 6 eine Nachstellvorrichtung 7 bildet. Das Gestängeteil 6 ist an einem üblichen, ebenfalls als H-Gestänge ausgebildeten Bremsgestänge 8 für eine Radklotzbremse dargestellte Reibungsbremse 9 angelenkt. Das zweite Ende des anderseitigen Bremshebels 3 ist ohne Zwischenschaltung einer Nachstellvorrichtung mit einem nicht weiter dargestellten Bremsgestänge 8 für eine weitere Reibungsbremse — ebenfalls nicht dargestellt — sowie mit einer Steuerstange 10 verbunden.

Die Steuerstange 10 führt zur Nachstellvorrichtung 7, mit welcher sie über eine Anschlagvorrichtung 37 koppelbar ist. Die Nachstellvorrichtung 7 ist also in üblicher Weise in die Bremsanordnung eingeordnet.

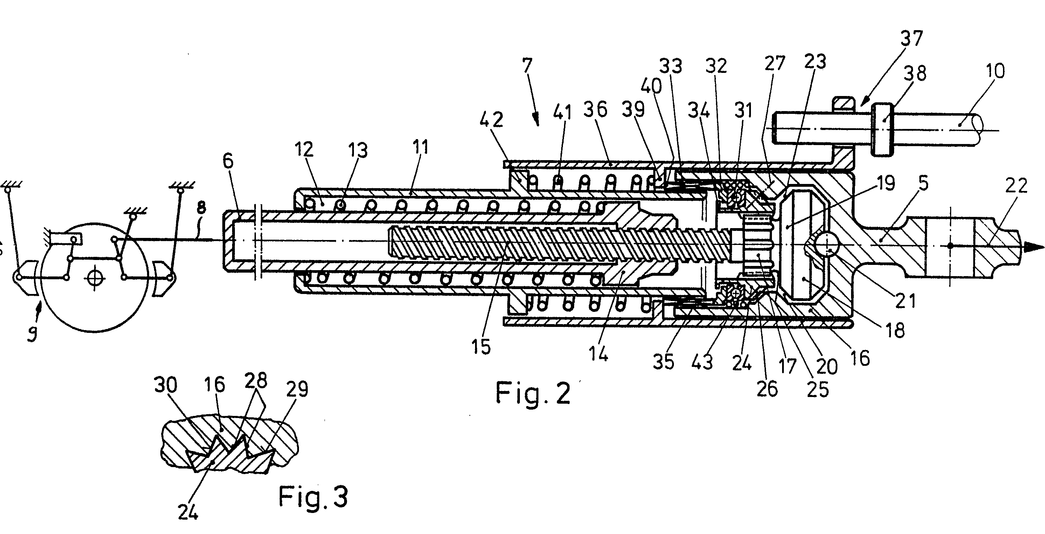

In einer ersten Ausführungsform gemäss Fig. 2 ist das Gestängeteil 5 der Nachstellvorrichtung 7 im wesentlichen rohrartig ausgebildet und übergreift zumindest mit seinem dem Bremshebel 3 abgewandten Endabschnitt 11 das ebenfalls rohrartig ausgebildete Gestängeteil 6, das teleskopisch verschieblich in ihm geführt ist. Die beiden Gestängeteile 5 und 6 sind um ihre gemeinsame Achse undrehbar am Bremshebel 3 bzw. dem Bremsgestänge 8 angelenkt. Im Ringraum 12 zwischen den beiden Gestängeteilen 5 und 6 befindet sich eine Vorspannfeder 13, welche mit ihrer Vorspannung das Gestängeteil 6 in Einzugrichtung in das Gestängeteil 5 belastet. Der Nachstellvorrichtung 7 gehört eine Verschraubung zu, welche eine am dem Bremsgestänge 8 abgewandten Ende des Gestängeteiles 6 angeordnete Mutter 14 und eine mit dieser über ein nicht selbsthemmendes Gewinde verschraubte Gewindespindel 15 umfasst. An ihrem aus dem Gestängeteil 6 ragenden Ende innerhalb eines Kopfteiles 16 des Gestängeteiles 5 weist die Gewindespindel 15 einem Abschnitt 17 mit als Längsnuten ausgebildetem Schiebesitz auf, an welchen sich ein flanschartiges Endstück 18 mit einer dem Gestängeteil 6 zugewandten, konischen Kupplungsfläche 19 für eine Drehkupplung 20 anschliesst. An diesem Ende ist die Gewindespindel 15 über eine Kugel 21 in der durch den Pfeil 22 dargestellten Wirkrichtung der vom Bremshebel 3 auf das Gestängeteil 5 ausübbaren Bremskraft drehbar gegen das Gestängeteil 5 abgestützt. Der Kupplungsfläche 19 steht in der Ruhestellung der Nachstellvorrichtung gemäss Fig. 2 mit einem gewissen Öffnungsabstand eine entsprechend konische Kupplungsfläche 23 des Gestängeteiles 5 gegenüber; die beiden Kupplungsflächen 19 und 23 bilden zusammen die Drehkupplung 20. Auf dem Abschnitt 17 ist mittels des Schiebesitzes axial verschieblich, aber undrehbar ein ringartiges Kupplungsteil 24 gelagert, welches in dem Pfeil 22 entsprechender Verschieberichtung durch das als Anschlag 25 wirkende Endstück 18 abfangbar ist. Das Kupplungsteil 24 ist über eine im Ruhezustand der Nachstellvorrichtung geschlossene, als verzahnte Konuskupplung ausgebildete Steuerkupplung 26 mit dem Kopfteil 16 des Gestängeteiles 5 kuppelbar; die Steuerkupplung 26 ist gemäss der einen Schnitt entlang der strichpunktierten Linie 27 darstellenden Fig. 3 mit unter Drehmomentbelastung eine Öffnungskraft erzeugenden, schrägen Zahnflanken 28 in ihrer Verzahnung zwischen einem im wesentlichen in Pfeilrichtung 22 weisenden Kupplungsprofil 29 am Kupplungsteil 24 und einem Gegenprofil 30 am Kopfteil 16 ausgebildet. Entgegen der Pfeilrichtung 22 ist das Kupplungsteil 24 über ein Wälzlager 31 gegen radial einwärtsragende Ansätze 32 an Stösseln 33 abgestützt. Ein ringflanschartiger Ansatz 34 des Kupplungsteiles 24 hintergreift auf der dem Wälzlager 31 abgewandten Seite die Ansätze 32. Die achsparallel zu den Gestängeteilen 5 und 6 und gleichmässig über den Umfang verteilt angeordneten Stössel 33 durchragen verschieblich eine den Übergang vom Kopfteil 16 zum Endabschnitt 11 darstellende Einschnürung 35 des Gestängeteiles 5. Auf dem Aussenumfang des Gestängeteiles 5 ist verschieblich ein hülsenartiges Anschlagteil 36 gelagert, welches einer Anschlagvorrichtung 37 zugehört und welchem in Pfeilrichtung 22 mit einem dem Sollanlegehub der Reibungsbremse 9 entsprechendem Spiel ein Flansch 38 an der Steuerstange 10 gegenübersteht. Das Anschlagteil 36 weist etwa in der Mitte seiner Längserstreckung einen radial einwärtsragenden Ringflansch 39 auf, der auf seiner in Pfeilrichtung 22 liegenden Seite eine Anschlagkupplung 40 für die entgegen der Pfeilrichtung 22 liegenden Enden der Stössel 33 bildet. Andererseits liegt am Ringflansch 39 eine der Anschlagvorrichtung 37 zugehörende Feder 41 an, deren entgegen der Pfeilrichtung 22 liegendes Ende sich an einem Ringflansch 42 des Endabschnitts 11 abstützt. Eine kleine und gegenüber den Federn 13 und 41 schwache Feder 43 ist derart zwischen das Kopfteil 16 und die Ansätze 32 bzw. Stössel 33 eingespannt, dass sie die Stössel 33 in Schliessrichtung der Anschlagkupplung 40 belastet.

In der Ruhestellung, bei gelösten Bremsen, nehmen die Teile der Nachstellvorrichtung die in Fig. 2 dargestellten Lagen ein. Die Vorspannfeder 13 belastet in Pfeilrichtung 22 über die Mutter 14 die Gewindespindel 15, welche sich ihrerseits über die Kugel 21 gegen das Gestängeteil 5 abstützt; die von der Feder 41 über den Ringflansch 39, die Anschlagkupplung 40, die Stössel 33 mit Ansätzen 32, das Wälzlager 31 und das Kupplungsteil 24 geschlossen gehaltene Steuerkupplung 26 wird also nicht von der Kraft der Vorspannfeder 13 durchsetzt. Seitens des Bremsgestänges 8 auf die Nachstellvorrichtung 7 übertragene Stösse vermögen die Nachstellvorrichtung nicht ungewollt zu verstellen: In Pfeilrichtung 22 vom Bremsgestänge 8 auf das Gestängeteil 6 ausgeübte Stösse werden über die Mutter 14 auf die Gewindespindel 15 und von dieser über die Kugel 21 auf das Gestängeteil 5 übertragen, wobei das Kupplungsteil 24 über das Schiebeprofil des Abschnittes 17 von Axialbelastungen entlastet bleibt und nur kurzzeitige, keine Verstellungen bewirkende Drehmomentstösse erfährt; bei entgegen der Pfeilrichtung 22 auf das Gestängeteil 6 einwirkenden Stossbelastungen wird das Gestängeteil 6 entgegen der Vorspannung der Vorspannfeder 13 gemäss Fig. 2 geringfügig nach links ausgelenkt, wobei die Hubbewegungen durch das Lösespiel des Anschlages 25 aufgenommen werden, das Kupplungsteil 24 also ebenfalls keine Axialbelastungen durch die Stossbeanspruchungen erfährt und die Steuerkupplung 26 somit sicher geschlossen bleibt.

Zum Einleiten einer Bremsung wird der Bremszylinder 4 mit Druckluft beaufschlagt, woraufhin der gemäss Fig. 1 linke Bremshebel 3 auf das Gestängeteil 5 eine in Pfeilrichtung 22 wirkende Kraft ausübt und das Gestängeteil 5 somit gemäss Fig. 2 nach rechts zieht. Über den Endabschnitt 11 und die Vorspannung der Vorspannfeder 13 wird die Verschiebung des Gestängeteiles 5 auf das Gestängeteil 6 übertragen, welches über das Bremsgestänge 8 die Reibungsbremse 9 in Anlegerichtung verstellt. Zugleich nähert sich der Flansch 38 dem Anschlagteil 36 an, das Luftspiel der Anschlagvorrichtung 37 wird also vermindert.

Bei korrektem Lösespiel der Reibungsbremse 9 hält dieser Vorgang, bei welchem sich die Nachstellvorrichtung 7 als ganzes, wie ein starres Teil, gemäss Fig. 2 nach rechts verschiebt, an, bis die Reibungsbremse anliegt, also noch kraftlos geschlossen ist. In diesem Augenblick gelangt auch der Flansch 38 zur Anlage am Anschlagteil 36, wodurch die Anschlagvorrichtung 37 geschlossen wird.

Bei weiterer Bewegung des Gestängeteiles 5 in Pfeilrichtung 22 hält der von der Reibungsbremse 9 ausgeübte, rasch anwachsende Bewegungswiderstand über das Bremsgestänge 8 das Gestängeteil 6 unter Kompression der Vorspannfeder 13 zurück, und zugleich hindert der Flansch 38 über die geschlossene Anschlagvorrichtung 37 das Anschlagteil 36 an einer weiteren Bewegung nach rechts, so dass auch die Feder 41 komprimiert wird. Mit dem Anschlagteil 36 bleiben unter der Kraft der Feder 43 auch die Stössel 33 und das mit diesen über den Ansatz 34 gekuppelte Kupplungsteil 24 stehen und über die Mutter 14 wird mit dem Gestängeteil 6 die Gewindespindel 15 zurückgehalten. Bei der weiteren Bewegung des Gestängeteiles 5 öffnet sich somit die Steuerkupplung 26, was aber mangels eines auf die Gewindespindel 15 einwirkenden Drehmomentes ohne weitere Folgen bleibt, und sofort anschliessend gelangt die Kupplungsfläche 19 zur Anlage an der Kupplungsfläche 23, d.h. die Drehkupplung 20 schliesst sich. Sodann nimmt das Gestängeteil 5 über die geschlossene Drehkupplung 20 die somit undrehbar gehaltene Gewindespindel 15 und über die Mutter 14 das Gestängeteil 6 mit, wodurch, gegebenenfalls unter elastischer Verspannung des Bremsgestänges 8, die Reibungsbremse 9 fest zugespannt wird. Das Anschlagteil 36 wird hierbei vom Flansch 38 unter weiterer Kompression der Feder 41 zurückgehalten, die Anschlagkupplung 40 löst sich und die Stössel 33 sowie das Kupplungsteil 24 folgen bei geöffneter Steuerkupplung 26 der Bewegung des Gestängeteiles 5.

Beim nachfolgenden Bremsenlösen spielen sich entsprechend umgekehrte Vorgänge ab. Bei nachlassender, vom Bremshebel 3 in Pfeilrichtung 22 auf das Gestängeteil 5 einwirkender Bremskraft zieht die sich abbauende Verspannung der Reibungsbremse 9 und des Bremsgestänges 8 die Nachstellvorrichtung 7 mit Ausnahme des am Flansch 38 anliegend verbleibenden Anschlagteiles 36 nach links, bis die Reibungsbremse 9 nur noch kraftlos anliegt. Bei korrektem Lösespiel der Reibungsbremse 9 schliesst sich in dieser Lösephase die Anschlagkupplung 40. Bei weiterer Verschiebung des Gestängeteiles 5 nach links bleiben somit bei sich verlängernder Vorspannfeder 13 das Gestängeteil 6 mit dem Bremsgestänge 8 und der Gewindespindel 15 sowie mit dem Anschlagteil 36 die Stössel 33, das Wälzlager 31 sowie das Kupplungsteil 24 unter Kompression der Feder 43 stehen. Die Drehkupplung 20 öffnet sich und die Steuerkupplung 26 schliesst sich daher, und die Gewindespindel 15, welche sich während der Festbremsphase, bei geschlossener Drehkupplung 20, von der Kugel 21 abgehoben hatte, legt sich wieder an diese Kugel 21 an. Beim weiteren Lösehub des Gestängeteiles 5 nach links wird über die Kugel 21 die vermittels der geschlossenen Steuerkupplung 26 drehfest gehaltene Gewindespindel 15 sowie über die Mutter 14 das Gestängeteil 6 mitgenommen, wodurch über das Bremsgestänge 8 die Reibungsbremse 9 abgehoben wird. Zugleich werden über die geschlossene Steuerkupplung 26 das Kupplungsteil 24, das Wälzlager 31 und die Stössel 33 sowie über die geschlossene Anschlagkupplung 40 das Anschlagteil 36 unter Lösen der Anschlagvorrichtung 37 von der Bewegung des Gestängeteiles 5 mitgenommen. Bei Beendigen der Lösehubbewegung des Gestängeteiles 5 ist die Reibungsbremse mit einem Sollanlegehub gelöst und die Anschlagvorrichtung 37 mit einem diesem Sollanlegehub entsprechenden Hubweg geöffnet. Damit ist der Ausgangszustand, die Ruhestellung, wieder erreicht.

Sollte zu Bremsbeginn die Reibungsbremse 9 einen übermässig grossen Anlegehub aufweisen, so erfolgt das Einbremsen bis zum Schliessen der Anschlagvorrichtung 37 nach Überwinden des Sollanlegehubes wie vorstehend beschrieben, wobei sich die Nachstellvorrichtung 7 als ganzes wie ein starrer Körper nach rechts verschiebt. Nach Schliessen der Anschlagvorrichtung 37, bei noch geöffneter Reibungsbremse 9, wird bei der nachfolgenden Bewegung des Gestängeteiles 5 vom Flansch 38 das Anschlagteil 36 unter Spannen der Feder 41 zurückgehalten und die Feder 43 öffnet, wie vorstehend bereits beschrieben, die Steuerkupplung 26. Während dieses Öffnungsvorganges der Schaltkupplung 26 sind die Gewindespindel 15 sowie das Gestängeteil 6 unter der Verspannung der Vorspannfeder 13 der Bewegung des Gestängeteiles 5 gefolgt, die Gewindespindel 15 liegt über die Kugel 21 also noch am Gestängeteil 5 an. Beim Öffnen der Steuerkupplung 26 entfällt die Drehhemmung der Gewindespindel 15; die Vorspannfeder 13 vermag daher das Gestängeteil 6 in den Endabschnitt 11 des Gestängeteiles 5 einzuziehen, wobei über die Mutter 14 und das nicht selbsthemmende Gewinde die Gewindespindel 15 in Drehung versetzt wird. Es ist wesentlich, dass während dieser Phase die Gewindespindel 15 unter der Axialkraft der Vorspannfeder 13 der Bewegung des Gestängeteiles 5 folgt, die Drehkupplung 20 durch die Weiterbewegung des Gestängeteiles 5 also nicht geschlossen werden kann. Das Einziehen des Gestängeteiles 6 unter Rotation der Gewindespindel 15 hält an, bis die Reibungsbremse 9 anliegt. Bezogen auf den Gesamthubweg hat während dieser Verkürzungsphase der Nachstellvorrichtung das Gestängeteil 5 nur eine unwesentliche Verschiebung nach rechts erfahren; der Wert des Sollanlegehubes wird hierdurch höchstens um einen vernachlässigbar kleinen Betrag verfälscht. Nach dem Anlegen der Reibungsbremse 9 hält der rasch anwachsende Bewegungswiderstand das Gestängeteil 6 unter Kompression der Vorspannfeder 13 zurück; über die Mutter 14 wird auch die Gewindespindel 15 unter Abheben von der Kugel 21 zurückgehalten, und die Drehkupplung 20 schliesst sich. Beim nachfolgenden Bremshub nimmt das Gestängeteil 5 über die Drehkupplung 20 die Gewindespindel 15 und die Mutter 14, wie vorstehend zum Festbremsvorgang bereits beschrieben, mit, und die Reibungsbremse 9 wird fest zugespannt. Es erfolgt also bereits während des Einbremsens eine derartige Verkürzung der Nachstellvorrichtung, dass der zu grosse Anlegehub der Reibungsbremse 9 auf dem Sollanlegehub verringert wird; die Nachstellvorrichtung ist hierbei also sofortwirkend. Wesentlich ist, dass die Nachstellung nicht durch eine Weiterbewegung des Gestängeteiles 5 oder durch entsprechende Abstimmung von Federkräften in ihrem Hub begrenzt ist, sondern vollständig bis zum Erreichen des Sollanlegehubes erfolgen kann.

Das nachfolgende Bremsenlösen erfolgt wie vorstehend bereits beschreiben.

Falls zu Bremsbeginn die Reibungsbremse 9 einen den Sollanlegehub unterschreitenden Anlegehub aufweist, gelangt nach anfänglicher Verschiebung des Gestängeteiles 5 nach rechts die Reibungsbremse 9 zur Anlage, bevor das Anschlagteil 36 am Flansch 38 anliegt. Bei der Weiterbewegung des Gestängeteiles 5 bleibt infolge des rasch anwachsenden Bewegungswiderstandes das Gestängeteil 6 mit der Mutter 14 stehen, wodurch auch die Gewindespindel 15 unter Abheben der Kugel 21 zurückgehalten wird. Bei einer geringen Weiterbewegung des Gestängeteiles 5, welcher unter der Kraft der Vorspannfeder 41 das Anschlagteil 36 und über die geschlossene Anschlagkupplung 40, die Stössel 33 und das Wälzlager 31 auch das Kupplungsteil 24 unter Verschiebung auf dem Abschnitt 25 der ortsfest gehaltenen Gewindespindel 15 folgen, schliesst sich der Anschlag 25, d.h. das Endstück 18 legt sich entgegen der Pfeilrichtung 22 gegen das Kupplungsteil 24 an. Beim nachfolgenden Hub des Gestängeteiles 5 hält die Gewindespindel 15 über den Anschlag 25 das Kupplungsteil 24 und über das Wälzlager 31 sowie die Anschlagkupplung 40 das Anschlagteil 36 zurück, bis die Steuerkupplung 26 geöffnet ist. Die Gewindespindel wird beim Öffnen der Steuerkupplung 26 drehbar und folgt daher unter der in Pfeilrichtung 22 verlaufenden Axialbelastung durch die Feder 41 unter Ausschrauben aus der Mutter 14 der weiteren Bewegung des Gestängeteiles 5 nach; die Kraftübertragung erfolgt dabei von der Feder 41 über die ebenfalls der weiteren Bewegung des Gestängeteiles nachfolgenden Teile Anschlagteil 36, Stössel 33, Axiallager 31, Kupplungsteil 24, geschlossener Anschlag 25 auf die Gewindespindel 15. Während dieser Vorgänge seit Anlegen der Reibungsbremse 9 hat das Gestängeteil 5 einen, bezogen auf den Gesamthub, nur geringfügig kleinen Hub, nämlich den Schliesshub für den Anschlag 25 sowie den Öffnungshub für die Steuerkupplung 26, zurückgelegt, wodurch der Sollanlegehub für die Reibungsbremse nur um einen vernachlässigbar kleinen Wert verfälschbar ist. Bei der Weiterbewegung des Gestängeteiles 5 folgt die sich aus der Mutter 14 nach rechts ausschraubende Gewindespindel 15 dieser Bewegung, bis das Anschlagteil 36 am Flansch 38 anschlägt, die Anschlagvorrichtung 37 also geschlossen wird. Während dieses Vorganges hat sich die Nachstellvorrichtung durch Ausziehen des Gestängeteiles 6 aus dem Endabschnitt 11 unter Kompression der Vorspannfeder 13 derart verlängert, dass der Anlegehub für die Reibungsbremse 9 auf den Sollwert vergrössert ist. Bei der weiteren Hubbewegung des Gestängeteiles 5 wird über die geschlossene Anschlagvorrichtung 37 das Anschlagteil 36 unter Kompression der Feder 41 zurückgehalten; die Feder 43 hält entsprechend die Stössel 33 sowie über den Ansatz 34 das Kupplungsteil 24 zurück, und auf die Gewindespindel 15 wirkt somit keine Axialbelastung mehr ein. Die Gewindespindel 15 bleibt also stehen, die Drehkupplung 20 schliesst sich, und nunmehr nimmt, wie vorstehend zum Festspannen der Reibungsbremse 9 bereits beschrieben, das Gestängeteil 5 bei seiner nachfolgenden Verschiebung in Pfeilrichtung 22 über die geschlossene Drehkupplung 20 die wieder drehfest gehaltene Gewindespindel 15, die Mutter 14 und das Gestängeteil 6 zum festen Zuspannen der Reibungsbremse 9 mit. Die Stössel 33 sowie der Kupplungsring 26 folgen der Bewegung des Gestängeteiles 5 während dieses Festspannhubes, während über die Anschlagvorrichtung 37 das Anschlagteil 36 unter Kompression der Feder 41 zurückgehalten wird.

Auch bei zu kleinem Anlegehub der Reibungsbremse 9 zu Bremsbeginn erfolgt also die Anlegehubkorrektur beim noch nahezu kraftlosen Anlegen der Reibungsbremse; die Nachstellvorrichtung ist also auch hierbei sofortwirkend.

Das nachfolgende Bremsenlösen erfolgt wie bereits beschrieben.

Es ist festzustellen, dass in jeder Funktionsphase der Nachstellvorrichtung 7 die Vorspannfeder 13 und die Feder 41 völlig unabhängig voneinander wirken und dementsprechend unabhängig voneinander derart zu bemessen sind, dass sie mit Sicherheit die von ihnen zu bewegenden Teile bewegen können. Die der Anschlagvorrichtung 37 zuzurechnende Feder 41 kann daher unabhängig von der Feder 13 relativ schwach ausgebildet werden; während des Bremsens nimmt daher die Feder 41 auch nur einen geringen Anteil der Bremskraft zu ihrer Kompression auf, und der Wirkungsgrad der Nachstellvorrichtung ist dementsprechend hoch. Die Feder 43 ist schwächer als die Vorspannfeder 13 und die Feder 41 zu bemessen.

Gemäss vorstehender Funktionsbeschreibung bewirkt die Feder 43 in bestimmten Funktionsphasen ein Öffnen der Steuerkupplung 26. Abweichend von der beschriebenen Ausführungsform brauchen hierbei die Zahnflanken 28 nicht schräg, bei Drehmomentbelastung eine Öffnungskraft erzeugend, ausgebildet zu sein, die Verzahnung kann vielmehr auch mit senkrecht zur Drehmomentbelastung verlaufenden Zahnflanke ausgebildet sein. Es ist jedoch auch möglich, die Öffnung der Steuerkupplung nicht allein von der Feder 43 bewirken zu lassen, sondern hierzu das die Steuerkupplung 26 belastende Drehmoment unterstützend oder auch alleinig heranzuziehen: Bei der Ausbildung der Verzahnung der Steuerkupplung 26 in der zu Fig. 3 beschriebenen Weise mit schrägen Zahnflanken 28 wird bei einer Drehmomentbelastung das Kupplungsteil 24 vom Gegenprofil 30 des Gestängeteiles 5 weggedrückt, wodurch bei entsprechender Drehmomentbelastung ebenfalls ein Öffnen der Steuerkupplung 26 entgegen beispielsweise der Belastung durch die Feder 41 bewirkbar ist. Bei entsprechender Ausgestaltung der Zahnflanke 28 kann somit die Feder 43 weiter geschwächt ausgeführt werden bzw. sogar gänzlich entfallen, ohne im weiteren die Funktionsweise der Nachstellvorrichtung 7 zu ändern.

Beim Austausch verschlissener gegen neue Reibbeläge an der Reibungsbremse 9 ist die Nachstellvorrichtung durch einfaches Zurückdrücken der Bremsbacken bzw. Bremsklötze der Reibungsbremse 9 rückstellbar. Bei dieser Rückstellung wird das Gestängeteil 6 gemäss Fig. 2 nach links aus dem Endabschnitt 11 entgegen der Kraft der Vorspannfeder 13 herausgezogen, wobei es über die Mutter 14 die Gewindespindel 15 mitnimmt, bis nach Schliessen des Anschlages 25 auch das Kupplungsteil 24 entgegen der Kraft der Feder 41 mitgenommen wird und sich die Steuerkupplung 26 löst; die Drehkupplung 20 ist hierbei noch geöffnet. Beim weiteren Herausziehen des Gestängeteiles 6 verschraubt sich die Gewindespindel 15 in der Mutter 14 unter der Axialbelastung durch die Feder 41 relativ nach rechts, wodurch die Rückstellung der Nachstellvorrichtung erfolgt. Nach Beendigung der Rückstellung rastet die Steuerkupplung 26 wieder ein. Es ist wesentlich, dass bei der nächstfolgenden Bremsung zu Bremsbeginn ein übermässiger Rückstellungshub sofort nachgestellt wird, die Bremsung durch den übermässigen Rückstellungshub also nicht beeinträchtigt wird.

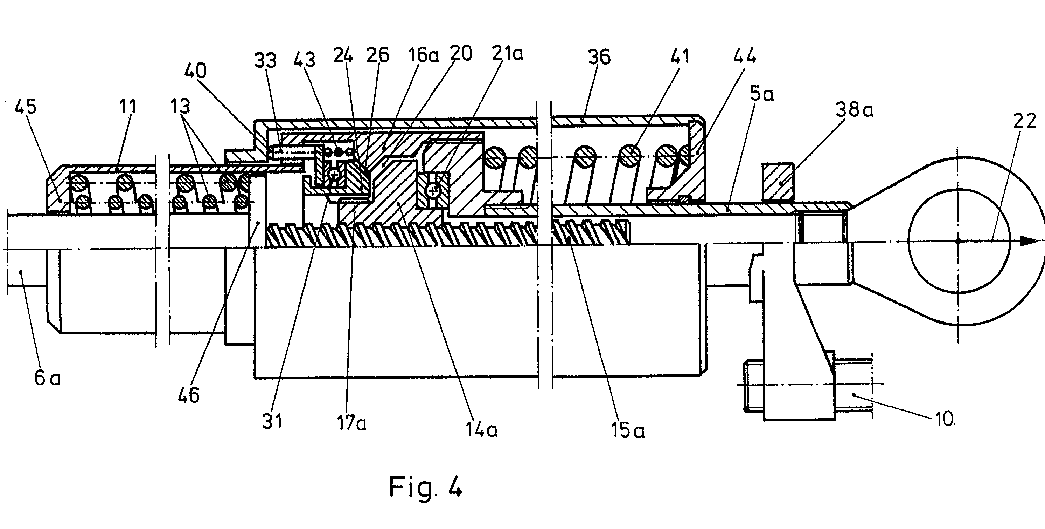

Die Nachstellvorrichtung gemäss Fig. 2 ist in einfacher Weise derart abänderbar, dass als drehbares Verschraubungsteil nicht die Gewindespindel, sondern die Mutter vorgesehen ist; eine derartig ausgebildete Nachstellvorrichtung ist in Fig. 4 dargestellt. Bei der Nachstellvorrichtung nach Fig. 4 sind der Nachstellvorrichtung nach Fig. 2 gleiche Teile mit den gleichen Bezugszeichen, einander funktionell entsprechende Teile mit durch den Index a ergänzten Bezugszeichen nach Fig. 2 bezeichnet.

Bei dem Gestängesteller nach Fig. 4 übergreift das rohrartige Gestängeteil 5a mit Radialspiel die Gewindespindel 15a, welche starr mit dem stangenartigen Gestängeteil 6a verbunden ist. Auf dem Gestängeteil 5a ist verschieblich der mit der Stange 10 verbundene Flansch 38a geführt, dem mit einem dem Sollanlegehub entsprechenden Abstand das ebenfalls auf dem Gestängeteil 5a und dem mit diesem starr verbundenen Endabschnitt 11 verschieblich gelagerte Anschlagteil 36 gegenübersteht. Das dem Kopfteil 16 nach Fig. 2 entsprechende Teil 16a ist gemäss Fig. 4 zwischen dem rohrartigen Abschnitt des Gestängeteiles 5a und dem Endabschnitt 11 eingeordnet und umgibt die in diesem drehbar gelagerte Mutter 14a. Die über ein nicht selbsthemmendes Gewinde mit der Gewindespindel 15a verschraubte Mutter 14a ist in der der Pfeilrichtung 22 entsprechenden Bremskraftrichtung über ein der Kugel 21 entsprechendes Wälzlager 21a drehbar gegen das Gestängeteil 5a abgestützt. Andererseits ist die Mutter 14a über die Drehkupplung 20 mit dem Teil 16a bzw. Gestängeteil 5a kuppelbar. Ein Abschnitt 17a der Mutter 14a ist über einen nur Axialverschiebungen zulassenden, Relativverdrehungen jedoch ausschliessenden Schiebesitz mit dem Kupplungsteil 24 gekoppelt, welches einerseits über die Steuerkupplung 26 mit dem Teil 16a bzw. Gestängeteil 5a kuppelbar und andererseits über das Wälzlager 31 gegen die von der Feder 43 belasteten Stössel 33 abgestützt ist. Die Stössel 33 sind ihrerseits über die Anschlagkupplung 40 entgegen der Pfeilrichtung 22 gegen das Anschlagteil 36 abgestützt. Die den Rohrabschnitt des Gestängeteiles 5a umgebende Feder 41 ist zwischen dem Teil 16a des Gestängeteiles 5a und der dem Flansch 38a benachbarten Stirnwand 44 des Anschlagteiles 36 eingespannt. Die Vorspannfeder 13 ist zwischen der Stirnwand 45 des Endabschnittes 11 und einem Flansch 46 am Übergang des Stangenabschnittes des Gestängeteiles 6a in die Gewindespindel 15a eingespannt.

Unter Berücksichtigung der Vertauschung von drehbarer bzw. undrehbarer Halterung von Gewindespindel 15 bzw. 15a und Mutter 14 bzw. 14a als drehbares bzw. undrehbares Verschraubungsteil entspricht die Funktion der Nachstellvorrichtung nach Fig. 4 völlig derjenigen nach Fig. 2; eine gesonderte Beschreibung der Funktionsweise der Nachstellvorrichtung nach Fig. 4 erübrigt sich daher.

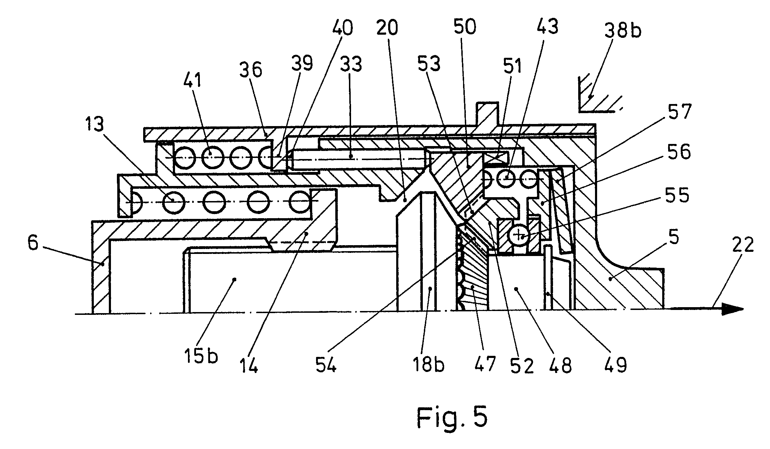

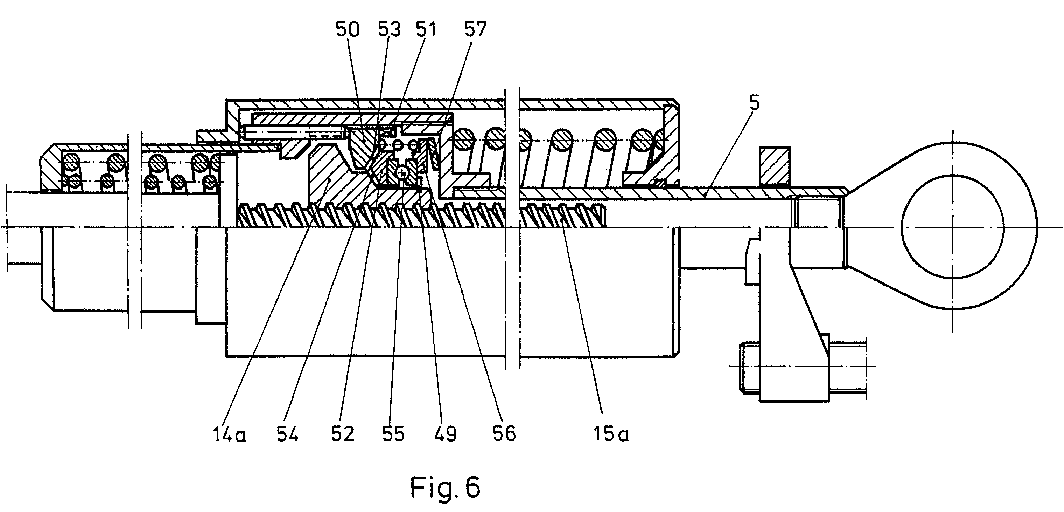

Bei den Nachstellvorrichtungen nach Fig. 5 und 6 ist im Bereich der Steuerkupplung ein zu den vorstehend beschriebenen Ausführungsformen geänderter Aufbau vorgesehen; die Funktionen entsprechen einander jedoch weitgehend.

Die Nachstellvorrichtung nach Fig. 5 weist entsprechend derjenigen nach Fig. 2 als drehbares Verschraubungsteil die Gewindespindel auf; sie ist daher mit der Ausführungsform nach Fig. 2 vergleichbar. Gleiche Teile sind daher mit den Bezugszeichen nach Fig. 2 und einander funktionell entsprechende Teile mit durch den Index b ergänzten Bezugszahlen nach Fig. 2 bezeichnet.

Die Nachstellvorrichtung nach Fig. 5 weist zwei undrehbar gehaltenen Gestängeteile 5 und 6 auf, zwischen welchen eine Vorspannfeder 13 eingespannt ist. Eine mit dem Gestängeteil 6 verbundene und somit undrehbare Mutter 14 ist über ein nicht selbsthemmendes Gewinde mit einer drehbar gelagerten Gewindespindel 15b verschraubt. Die Gewindespindel 15b weist ein Flanschstück 18b auf, welches einerseits eine Drehkupplung 20 zum Gestängeteil 5 bildet und andererseits ein Kupplungsprofil 47 aufweist. An das Kupplungsprofil 47 schliesst sich ein zylindrischer Abschnitt 48 an, der mit einem Ringflansch 49 endet. Das in Pfeilrichtung 22 liegende Ende der Gewindespindel 15b steht mit geringem Abstand einer Wandung des Gestängeteiles 5 gegenüber. Auf dem Aussenumfang des Gestängeteiles 5a ist ein Anschlagteil 36 verschieblich gelagert, welchem mit dem Sollanlegehub der Reibungsbremse entsprechenden Abstand in Pfeilrichtung 22 ein dem Flansch 38 nach Fig. 2 entsprechendes Widerlager 38b gegenübersteht. Zwischen einem Ringflansch 39 des Anschlagteiles 36 und dem Gestängeteil 5 ist eine Feder 41 eingespannt. Am Ringflansch 39 liegen über eine Anschlagkupplung 40 in Pfeilrichtung 22 Stössel 33 an, welche verschieblich die Wandung des Gestängeteiles 5 durchragen. Innerhalb des Gestängeteiles 5 liegen die Stössel 33 an einem Ringkörper 50 an, der etwa im Bereich des Kupplungsprofils 47 die Gewindespindel 15b umgibt. Der Ringkörper 50 ist mittels einer Axialverzahnung 51 axial verschieblich, jedoch undrehbar im Gestängeteil 5 gelagert. An einer in Pfeilrichtung 22 weisenden, konischen Innenfläche weist der Ringkörper 50 ein Kupplungsprofil auf, welches zusammen mit einem entsprechenden Gegenprofil an einem ringförmigen Zwischenteil 52 eine erste Drehkupplung 53 für das Steuerorgan der Nachstellvorrichtung bildet. Das Zwischenteil 52 weist ein zweites, der Pfeilrichtung 22 abgewandtes Gegenprofil auf, welches zusammen mit dem Kupplungsprofil 47 eine zweite Drehkupplung 54 für das Steuerorgan bildet. Andererseits ist das Zwischenteil 52 über ein Axiallager 55 in Pfeilrichtung 22 gegen einen Ringflansch 56 abgestützt, der seinerseits über eine Tellerfeder 57 federnd gegen eine Wandung des Gestängeteiles 5 abgestützt ist. Das Axiallager 55 ist auf dem Abschnitt 48 axial verschieblich gelagert, wobei bei geschlossener zweiter Drehkupplung 54 sich zwischen dem Axiallager 55 und dem Ringflansch 49 ein zumindest dem Öffnungshub der zweiten Drehkupplung 54 entsprechender Abstand befindet. Zwischen dem Ringkörper 50 und dem Ringflansch 56 ist eine schwache Feder 43 eingespannt. Die beiden Drehkupplungen 53 und 54 stellen Teilkupplungen einer Steuerkupplung dar.

Bei in Ruhestellung befindlicher Nachstellvorrichtung nehmen deren Teile die aus Fig. 5 ersichtlichen Lagen ein. Die Feder 41 hält über die Stössel 33 sowie den Ringkörper 50 die eine Teilkupplung der Steuerkupplung darstellende, erste Drehkupplung 53 entgegen der Kraft der Feder 43 geschlossen; von der ersten Drehkupplung 53 verläuft die von der Feder 41 ausgeübte Kraft über das Zwischenteil 52, das Axiallager 55, den Ringflansch 56 und die Tellerfeder 57 zurück zum Gestängeteil 5, an welchem sich die Feder 41 andererseits abstützt. Die Vorspannfeder 13 belastet über die Mutter 14 sowie die Gewindespindel 15b die zweite Drehkupplung 54 in Schliessrichtung; über das Zwischenteil 52, das Axiallager 55, den Ringflansch 56 und die Tellerfeder 57 schliesst sich der Kraftfluss der Vorspannfeder 13. Die Gewindespindel 15b ist also über die beiden geschlossenen Drehkupplungen 54 und 53 sowie die Axialverzahnung 51 drehfest gehalten, wobei die erste Drehkupplung 53 als Teilkupplung der Steuerkupplung von der Kraft der Vorspannfeder 13 entlastet ist.

Die Brems- und Lösevorgänge verlaufen ähnlich wie zur Nachstellvorrichtung nach Fig. 2 beschrieben:

Beim Bremsen mit dem Sollanlegehub entsprechendem Lösespiel an der Reibungsbremse bewegt sich anfänglich die Nachstellvorrichtung nach Fig. 5 wie ein starres Teil in Pfeilrichtung 22, bis die Reibungsbremse anliegt und das Anschlagteil 36 zur Anlage am Widerlager 38b gelangt. Bei der Weiterbewegung des Gestängeteiles 5 werden das Anschlagteil 36 sowie das Gestängeteil 6 zurückgehalten, die Gewindespindel 15b mit dem Zwischenteil 52 sowie dem Ringkörper 50 bleiben bei geschlossenen Drehkupplungen 53 und 54 ebenfalls stehen, und die Drehklupplung 20 schliesst sich. Beim weiteren Festbremshub des Gestängeteiles 5 wird über die Drehkupplung 20 die drehfest gehaltene Gewindespindel 15b und von dieser über die Mutter 14 das Gestängeteil 6 zum festen Zuspannen der Reibungsbremse mitgenommen, während das Anschlagteil 36 unter Spannen der Feder 41 und Öffnen der Anschlagkupplung 40 zurückgehalten wird. Es ist festzustellen, dass beim Einbremsvorgang der Nachstellvorrichtung nach Fig. 5 auch beim Übergang vom Anlege- zum Festbremshub die Gewindespindel 15b über die Drehkupplungen 20, 53 und 54 ohne jegliche Unterbrechung drehfest gehalten wird.

Beim nachfolgenden Lösen der Bremse spielen sich entsprechend umgekehrte Vorgänge ab.

Beim Einbremsen mit zu grossem Anlegehub wird nach Zurücklegen des Sollanlegehubes das Anschlagteil 36 vom Widerlager 38b zurückgehalten; bei der Weiterbewegung des Gestängeteiles 5 öffnet die Feder 43 die erste Drehkupplung 53, und die Gewindespindel 15b wird somit drehbar. Die Vorspannfeder 13 kann infolgedessen das Gestängeteil 6 rasch nach rechts bis zum Anlegen der Reibungsbremse verschieben, wobei über die Mutter 14 die Gewindespindel 15b in Drehung versetzt wird und sich in die Mutter 14 einschraubt. Die zweite Drehkupplung 54 bleibt dabei geschlossen und das Zwischenteil 52 rotiert mit der Gewindespindel 15b. Der zu grosse Anlegehub der Reibungsbremse wird also beim Einbremsvorgang auf dem Sollanlegehub durch Verkürzen der Nachstellvorrichtung nachgestellt. Nach Anlegen der Reibungsbremse hält der rasch anwachsende Bewegungswiderstand das Gestängeteil 6 zurück; die Gewindespindel 15b bleibt stehen, die Drehkupplung 20 schliesst sich und beim weiteren Festbremshub des Gestängeteiles 5 werden über die Drehkupplung 20 die drehfest gehaltene Gewindespindel 15b, die Mutter 14 sowie das Gestängeteil 6 mitgenommen. Die erste Drehkupplung 53 kann je nach Auslegung der Fertigungstoleranzen unmittelbar vor Schliessen der Drehkupplung 20 in Eingriff geraten und mittels ihres axialen Zahnspieles ein festes Zuspannen der Drehkupplung 20 ermöglichen; die Drehkupplung 53 kann aber auch während des sich an die Nachstellung des zu grossen Anlegehubes anschliessenden Festbremshubes geöffnet bleiben und erst beim Lösevorgang beim Übergang vom Festbremshub zum kraftlosen Anlegen der Reibungsbremsen unter der Kraft der Feder 41 geschlossen werden. Weitere Folgen resultieren aus diesen unterschiedlichen Funktionsmöglichkeiten nicht. Der weitere Lösevorgang erfolgt wie bereits beschrieben.

Sollte zu Bremsbeginn die Reibungsbremse einen zu kleinen Anlegehub aufweisen, so wird bei Bewegung des Gestängeteiles 5 in Pfeilrichtung 22 bei Anlegen der Reibungsbremse das Gestängeteil 6 entgegen der Kraft der Vorspannfeder 13 zurückgehalten, bevor das Anschlagteil 36 am Widerlager 38b zur Anlage gelangt. Beim Weiterhub des Gestängeteiles 5 werden durch die Feder 41 das Anschlagteil 36, die Stössel 33, der Ringkörper 50, über die geschlossene Drehkupplung 53, das Zwischenteil 52, das Axiallager 55 sowie der Ringflansch 56 mitgenommen, während über die Mutter 14 die Gewindespindel 15b vom Gestängeteil 6 zurückgehalten wird. Das Axiallager 55 gelangt dabei unter Öffnen der zweiten Drehkupplung 54 zur Anlage am Ringflansch 49. Beim Öffnen der zweiten Drehkupplung 54 wird die Gewindespindel 15b drehbar und folgt im weiteren der Bewegung des Gestängeteiles 5 in Pfeilrichtung 22 infolge der Anlage des Ringflansches 49 am Axiallager 55 unter Ausschrauben aus der Mutter 14 nach. Nach Zurücklegen des Sollanlegehubes gelangt das Anschlagteil 36 zur Anlage am Widerlager 38b und wird infolgedessen zurückgehalten. Beim Weiterhub des Gestängeteiles 5 bleibt daher mit dem Gestängeteil 6 die Gewindespindel 15b mit dem Zwischenteil 52 sowie dem Ringkörper 50 zurück, bis sich die Drehkupplung 20 schliesst. Beim Weiterhub des Gestängeteiles 5 wird über die Drehkupplung 20, die drehfest gehaltene Gewindespindel 15b und von dieser über die Mutter 14 das Gestängeteil 6 zum festen Zuspannen der Reibungsbremse mitgenommen. Zu Beginn dieses Festbremshubes schliesst sich die zweite Drehkupplung 54 wieder, und anschliessend wird das Zwischenteil 52 und unmittelbar anschliessend auch der Ringkörper 50 mitgenommen. Auch der zu kleine Anlegehub wird also beim Anlegevorgang der Reibungsbremse durch Verlängerung der Nachstellvorrichtung nachgestellt.

Das nachfolgende Bremsenlösen erfolgt in bereits erwähnter Weise.

Auch bei der Nachstellvorrichtung nach Fig. 5 erfolgt also ein sofortiges, vollständiges Nachstellen eines zu grossen oder eines zu kleinen Anlegehubes der Reibungsbremse auf den Sollanlegehub.

Bei der Nachstellvorrichtung nach Fig. 5 stellt entsprechend zur Nachstellvorrichtung nach Fig. 2 die Gewindespindel 15b das drehbare Verschraubungsteil dar; es ist jedoch möglich, entsprechend zu Fig. 4 die Gewindespindel als undrehbares und die Mutter als drehbares Verschraubungsteil auszubilden; in Fig. 6 ist eine derartig umgestaltete Nachstellvorrichtung dargestellt.

Die Nachstellvorrichtung nach Fig. 6 entspricht in ihrem Aufbau der Nachstellvorrichtung nach Fig. 4, wobei lediglich anstelle des dortigen Steuerorgans das Steuerorgan der Nachstellvorrichtung nach Fig. 5 mit dem Ringkörper 50, welcher über die Axialverzahnung 51 drehfest, aber axial verschieblich gehalten ist, mit dem Zwischenteil 52, den beiden Drehkupplungen 53 und 54, dem durch den Ringflansch 49 abfangbaren Axiallager 55 und dem über die Tellerfeder 57 gegen das Gestängeteil 5 abgestützten Ringflansch 56 vorgesehen ist. Unter Berücksichtung der Vertauschung von Mutter 14 als undrehbares Verschraubungsteil und Gewindespindel 15b als drehbares Verschraubungsteil bei der Nachstellvorrichtung nach Fig. 5 in die Mutter 14a als drehbares Verschraubungsteil und die Gewindespindel 15a als undrehbares Verschraubungsteil bei der Nachstellvorrichtung nach Fig. 6 entspricht die Funktion der Nachstellvorrichtung nach Fig. 6 derjenigen nach Fig. 5; eine Funktionsbeschreibung zur Nachstellvorrichtung nach Fig. 6 erübrigt sich daher.

Die Nachstellvorrichtungen nach Fig. 5 und 6 können ebenso wie die Nachstellvorrichtungen nach Fig. 2 und 4 durch Aufspreizen der Reibungsbremse zurückgestellt werden: Wird auf das Gestängeteil 6 gemäss Fig. 5 eine die Vorspannung der Vorspannfeder 13 übersteigende Kraft nach links ausgeübt, so wird das Gestängeteil 6 unter Kompression der Vorspannfeder 13 aus dem Gestängeteil 5 nach links herausgezogen. Die Mutter 14 nimmt dabei anfänglich die Gewindespindel 15b mit, die zweite Drehkupplung 54 öffnet sich, und der Ringflansch 49 gelangt sodann zur Anlage am Axiallager 55 und hält die Gewindespindel 15b gegen eine weitere Verschiebung nach links fest. Beim weiteren Herausziehen des Gestängeteiles 6 schraubt sich daher die Gewindespindel 15b unter Rotation aus der Mutter 14 heraus. Beim Abklingen der Zugbeanspruchung am Gestängeteil 6 kehrt die Nachstellvorrichtung in die in Fig. 5 dargestellte Ruhestellung zurück.

Übt im Lösezustand der Reibungsbremse das Bremsgestänge auf das Gestängeteil 6 der Nachstellvorrichtung nach Fig. 5 in Pfeilrichtung 22 gerichtete Stosskräfte aus, so werden diese Stossbeanspruchungen über die Mutter 14, die Gewindespindel 15b, die zweite Drehkupplung 54, das Zwischenteil 52, das Axiallager 55 und den Ringflansch 56 auf die Tellerfeder 57 übertragen, welche diese Stossbeanspruchungen abgefedert bzw. gedämpft an das Gestängeteil 5 weitergibt. Die beiden Drehkupplungen 54 und 53 bleiben dabei geschlossen. Nur bei aussergewöhnlich hohen Stossbeanspruchungen wird die Tellerfeder 57 derart weit eingefedert, dass die Gewindespindel 15b mit ihrer rechten Stirnfläche zur unmittelbaren Anlage am Gestängeteil 5 gelangt. Die Tellerfeder 57 dient also dem Begrenzen der Stossbeanspruchung des Steuerorganes der Nachstellvorrichtung nach Fig. 5; bei der Nachstellvorrichtung nach Fig. 6 weist die Tellerfeder 57 eine entsprechende Funktion auf. Bei den Nachstellvorrichtungen nach Fig. 2 und 4 ist eine gefederte Anordnung der Kugel 21 bzw. des Wälzlagers 21a nicht im gleichen Masse erforderlich, da dort das Steuerorgan durch die Schiebführung am Abschnitt 17 bzw. 17a von den Stossbeanspruchungen entlastet angeordnet ist.

Abweichend zu den vorstehend beschriebenen Ausführungsbeispielen kann eine Nachstellvorrichtung insbesondere nach den Ansprüchen 1 und 4 auch dadurch realisiert werden, dass die Steuerkupplung als radiale Klinkengesperre mit einem Klinkenrad und einer Sperrklinke ausgebildet wird. Das Klinkenrad wird dabei zumindest in Drehrichtung des drehbaren Verschraubungsteiles zum Nachstellen eines zu grossen Anlegehubes drehfest, gegebenenfalls jedoch axial verschieblich mit dem drehbaren Verschraubungsteil verbunden und die Sperrklinke ist derart anzuordnen, dass sie unter Federbelastung in das Klinkenrad einrastet und dieses zumindest in der vorstehend genannten Drehrichtung sperrt. Das Steuerorgan ist hierbei derart auszubilden, dass es, beispielsweise mittels einer Nockenbahn oder Schrägfläche, bei einer Verschiebung entgegen der Bremskraftrichtung relativ zum einen Gestängeteil die Sperrklinke entgegen deren Federbelastung aus dem Klinkenrad aushebt, so dass sich dieses mitsamt dem drehbaren Verschraubungsteil zu drehen vermag. Entgegengesetzt zur vorstehend genannten Drehrichtung kann das Klinkenrad über einen Freilauf mit dem drehbaren Verschraubungsteil gekoppelt sein bzw. der Eingriff der Sperrklinke in das Klinkenrad kann in dieser entgegengesetzten Drehrichtung selbstlösend, beispielsweise durch entsprechende Schrägflächen an den Klinkenradzähnen bzw. der Sperrklinke, ausgebildet sein.

Beim in beiden Drehrichtungen sperrenden Klinkengesperre unter Wegfall des Freilaufes ist für die Sperrklinke eine zweite Steuerung vorzusehen, welche die Sperrklinke bei einer die Kraft der Vorspannfeder übersteigenden Bremskraftbelastung der Nachstellvorrichtung, beispielsweise in Abhängigkeit der hierbei auftretenden Relativverschiebung zwischen dem einen Gestängeteil und dem drehbaren Verschraubungsteil, aushebt.

Abweichend zu vorstehender Beschreibung kann die Koppelung zwischen Steuerorgan und Sperrklinke auch derart ausgebildet sein, dass das Steuerorgan in seiner Ruhestellung die Sperrklinke in das Klinkenrad eingerastet hält und nur bei seiner Relativverschiebung zum einen Gestängeteil bzw. zum drehbaren Verschraubungsteil freigibt, so dass die Sperrklinke unter einer Federspannung oder unter der Drehmomentbelastung des Klinkenrades ausrastet. Weiterhin kann der Freilauf durch eine zweite Teilkupplung, die ähnlich der zweiten Drehkupplung 54 nach Fig. 5 wirkt und ausgebildet sein kann, ersetzt sein.

Die Funktionen der entsprechend vorstehenden Variationsmöglichkeiten abgeänderten Nachstellvorrichtungen sind ähnlich derjenigen der dargestellten Ausführungsbeispiele und können aus deren Funktionsweisen ohne weiteres abgeleitet werden. Wesentlich bei allen Ausführungsformen ist, dass zumindest eine Teilkupplung, d.h. die erste Drehkupplung 53 nach Fig. 5 oder das Klinkenradgesperre der Steuerkupplung oder die Steuerkupplung 26 gemäss Fig. 2 selbst allein durch Verschieben des Steuerorganes bzw. eines diesem zugehörenden Teiles relativ zu dem drehbaren Verschraubungsteil und dem einen Gestängeteil schaltbar ist, dieses Schalten also keine Relativverschiebung zwischen drehbarem Verschraubungsteil und einem Gestängeteil erfordert.

**Patentansprüche:**

1. Selbsttätige Nachstellvorrichtung für den Anlegehub von Bremsgestängen von insbesondere Schienenfahrzeugen, mit zwei mittels einer Verschraubungteleskopartig relativ zueinander verstellbaren, undrehbar gehaltenen Gestängeteilen, von denen wenigstens das eine (5) rohrartig ausgebildet und mit einem eine Bremskraft abgebenden Bremskraftmotor, gegebenenfalls Bremszylinder, und von denen das andere (6) mit zu den Bremsorganen führenden Gestängeteilen (8) gekoppelt ist, wobei die Verschraubung zwei Verschraubungsteile, bestehend aus einer auf einer Gewindespindel (15, 15a, 15b) mittels eines nichtselbsthemmenden Gewindes verschraubten Mutter (14), aufweist, von denen das eine Verschraubungsteil (15 bzw. 14) drehbar und mit Ausnahme von Kupplungsschalthüben axial unverschieblich im rohrartigen, einen Gestängeteil (5) gehalten und von denen das andere Verschraubungsteil (14 bzw. 15) undrehbar gehalten und fest mit dem anderen Gestängeteil (6) verbunden ist, mit einer im Lösezustand ein dem Sollanlegehub entsprechendes Spiel aufweisenden Anschlagvorrichtung (37), die ein in deren zur Bremskraftrichtung gleichgerichteten Schliessrichtung von einer Feder (41) belastetes, verschiebliches Anschlagteil (36) aufweist, mit einer im geschlossenem Zustand das drehbare Verschraubungsteil (15 bzw. 14) undrehbar mit dem einen Gestängeteil (5) kuppelnden Steuerkupplung (26), die zumindest bei Belastung durch ein Drehmoment in Öffnungsrichtung von einer im Vergleich zu der der Anschlagvorrichtung (37) zugehörenden Feder (41) schwachen Öffnungskraft belastet ist, und die ein von der der Anschlagvorrichtung zugehörenden Feder über das Anschlagteil (36) in ihrer Schliessrichtung belastbares Steuerorgan (Kupplungsteil 24) aufweist, mit einer entgegengesetzt zur Steuerkupplung (26) schaltbaren, die Bremskraft übertragenden Drehkupplung zwischen dem einen Gestängeteil (5) und dem drehbaren Verschraubungsteil (15 bzw. 14), und mit einer zwischen den beiden Gestängeteilen eingespannten, das eine Gestängeteil entgegen der Bremskraftrichtung belastenden Vorspannfeder (13), dadurch gekennzeichnet, dass zumindest eine Teilkupplung der Steuerkupplung (26, Drehkupplungen 53 und 54) von der Vorspannkraft (13) entlastet angeordnet ist.

2. Nachstellvorrichtung nach Anspruch 1, dadurch gekennzeichnet, dass das drehbare Verschraubungsteil (15, 15b, 14a) in Bremskraftrichtung (Pfeil 22) über ein die Vorspannkraft der Vorspannfeder (13) aufnehmendes Drehlager (21, 21a, Axiallager 55) gegen das eine Gestängeteil (5, 5a) abgestützt ist (Fig. 2, 4, 5, 6).

3. Nachstellvorrichtung nach Anspruch 2, dadurch gekennzeichnet, dass das Drehlager als gleichachsig zum drehbaren Verschraubungsteil (15) und zum einen Gestängeteil (5) zwischen diesen angeordnete Kugel (21) ausgebildet ist (Fig. 2).

4. Nachstellvorrichtung nach einem der Ansprüche 1, 2 oder 3, dadurch gekennzeichnet, dass zumindest die erste Teilkupplung (53) der Steuerkupplung (26, Drehkupplungen 53 und 54) bei zumindest im wesentlichen konstanter, axialer Relativlage des einen Gestängeteiles (5) und des drehbaren Verschraubungsteiles (15, 15a, 15b) zueinander durch zu diesen Teilen relatives Verschieben zumindest eines Teiles (Ringkörper 50) des Steuerorganes (Kupplungsteil 24) vorzugsweise entgegen der Bremskraftrichtung zu öffnend angeordnet ist.

5. Nachstellvorrichtung nach einem der Ansprüche 1, 2, 3 oder 4, dadurch gekennzeichnet, dass das Steuerorgan (Kupplungsteil 24) der Steuerkupplung (26, erste Drehkupplung 53) von einer es mit der Öffnungskraft belastenden Feder (43) belastet ist.

6. Nachstellvorrichtung nach einem der Ansprüche 1, 2, 3 oder 4, dadurch gekennzeichnet, dass die Steuerkupplung (26) verzahnt mit unter Drehmomentbelastung die Öffnungskraft erzeugenden, schrägen Zahnflanken (28) ausgebildet ist (Fig. 2, 3).

7. Nachstellvorrichtung nach einem der Ansprüche 5 oder 6, dadurch gekennzeichnet, dass das Steuerorgan wenigstens ein gegebenenfalls von der es in Öffnungsrichtung belastenden Feder (43) belastetes, über eine Anschlagkupplung (40) in Bremskraftrichtung (Pfeil 22) mit dem Anschlagteil (36) kuppelbares Steuerteil (Ansatz 32) aufweist, das drehbar, aber axial unverschieblich mit einem Kupplungsteil (24) kuppelbar ist, welches axial verschieblich, aber relativ undrehbar mit dem drehbaren Verschraubungsteil (15, 14a) gekoppelt ist, und welches ein im Bremskraftrichtung (Pfeil 22) weisendes, mit einem Gegenprofil (29) am einen Gestängeteil (5, 5a) die Steuerkupplung (26) bildendes Kupplungsprofil (29) aufweist (Fig. 2, 4).

8. Nachstellvorrichtung nach Anspruch 7, dadurch gekennzeichnet, dass das Steuerteil die radiale Wandung einer der Bremskraftrichtung abgewandten Einschnürung (35) des einen Gestängeteiles verschieblich durchsetzende, über den Umfang des Gestängeteiles (5, 5a) gleichmässig verteilt angeordnete Stössel (33) aufweist, die am der Bremskraftrichtung (Pfeil 22) abgewandten Ende über die Anschlagskupplung (40) an einem radial nach innen ragenden Ringflansch (39) des hülsenartigen, auf dem Aussenumfang des einen Gestängeteiles (5, 5a) verschieblich gelagerten Anschlagteils (36) anlegbar sind und die andererseits radial einwärtsragende Ansätze (32) aufweisen, an welchen das Kupplungsteil (24) drehbar, zumindest entgegen der Bremskraftrichtung (Pfeil 22) über ein Wälzlager (31), abgestützt ist, und dass das ringartig ausgebildete Kupplungsteil (24) über ein Schiebeprofil mit dem es durchsetzenden, drehbaren Verschraubungsteil (15, 14a) verbunden ist, wobei der Verschraubungsteil (15, 14a) verbunden ist, wobei der Verschiebehub des Kupplungsteiles (24) in Bremskraftrichtung (Pfeil 22) durch einen Anschlag (25) am drehbaren Verschraubungsteil (15, 14a) begrenzt ist (Fig. 2, 4).

9. Nachstellvorrichtung nach einem oder mehreren der Ansprüche 1 bis 6, dadurch gekennzeichnet, dass das Steuerorgan als ein das drehbare Verschraubungsteil (15b, 14a) umgebender Ringkörper (50) ausgebildet ist, der undrehbar, aber axial verschieblich in einem Gestängeteil (5) gelagert ist, und der ein in Bremskraftrichtung (Pfeil 22) weisendes, mit einem ersten Gegenprofil an einem ringförmigen Zwischenteil (52) eine erste Drehkupplung (53) bildendes Kupplungsprofil aufweist, dass das Zwischenteil (52) über ein Axiallager (55) in Bremskraftrichtung (Pfeil 22) gegen das eine Gestängeteil (5) abgestützt ist, und dass das Zwischenteil (52) ein zweites, der Bremskraftrichtung (Pfeil 22) abgewandtes Gegenprofil aufweist, das zusammen mit einem Kupplungsprofil am drehbaren Verschraubungsteil (15b, 14a) eine zweite Drehkupplung (54) bildet (Fig. 5, 6).

10. Nachstellvorrichtung nach Anspruch 9, dadurch gekennzeichnet, dass das das Zwischenteil (52) abstützende Axiallager (55) auf dem drehbaren Verschraubungsteil (15b, 14a) axial verschieblich gelagert ist, und dass das dem Zwischenteil (52) abgewandte Lagerteil des Axiallagers (55) in Bremskraftrichtung sowohl gegen einen Ringflansch (49) des einen Gestängeteiles (5) als auch gegen einen am drehbaren Verschraubungsteil (15b, 14a) angeordneten Ringflansch (56) anlegbar ist (Fig. 5, 6).

11. Nachstellvorrichtung nach Anspruch 10, dadurch gekennzeichnet, dass der Ringflansch (56) des Gestängeteiles in Bremskraftrichtung (Pfeil 22) gefedert am einen Gestängeteil (5) angeordnet ist (Fig. 5, 6).

**Claims:**

1. Automatic adjusting device for the application stroke of brake rods of rail vehicles in particular, with two rod parts held non-rotatably but telescopically adjustable relatively to one another by means of screws, at least one of said rod parts (5) is made to be tubular and is coupled to a braking force motor, if necessary a brake cylinder, generating a braking force, and the other (6) of which is coupled to rod parts (8) leading to the braking elements, whereby the screws have two screwing parts consisting of a nut (14) screwed on a threaded spindle (15, 15a, 15b) by means of a non-self-locking thread, one screw part of which (15 or 14) is held rotatably and, with the exception of coupling shift movements, axially non-displaceably in the one tubular rod part (5) and the other screw part of which (14 or 15) is held non-rotatably and is connected firmly to the other rod part (6), with a stop device (37) having in the release state a play corresponding to the desired application stroke, said stop device has a stop part (36) displaceable in the closing direction equidirectional with the brake force direction and loaded by a spring (41), with a control coupling (26) in the closed state coupling the rotatable screw part (15 or 14) non-rotatably with the one rod part (5), which control coupling, at least during loading by a torque in the opening direction, is loaded by an opening force weak compared with the spring (41) associated with the stop device (37) and which has a control element coupling part (24) that can be loaded in its closing direction by the spring associated with the stop device *via* the stop part (36), with a rotary coupling between the one rod part (5) and the rotatable screw part (15 or 14) transmitting the braking force, and connectable in the opposite direction to the control coupling (26) and with a prestressing spring (13) clamped between the two rod parts and loading the one rod part against the braking force direction, characterised in that at least one partial coupling of the control coupling (26, rotary couplings 53 and 54) is arranged to be unaffected by the prestress force (13).

2. Adjusting device according to claim 1, characterised in that the rotatable screw part (15, 15b, 14a) is supported in the brake force direction (arrow 22) against the one rod part (5, 5a) by means of a pivot bearing (21, 21a, axial bearing 55) receiving the bias force of the prestress spring (13) (Fig. 2, 4, 5, 6).

3. Adjusting device according to claim 2, characterised in that the pivot bearing is constructed as a ball (21) coaxial with the rotatable screw part (15) and the one rod part (5) and disposed between these (Fig. 2).

4. Adjusting device according to claim 1, 2 or 3, characterised in that at least the first partial coupling (53) of the control coupling (26, rotating couplings 53 and 54) is arranged to be open, with at least a substantially constant axial relative position of the one rod part (5) and of the rotatable screw part (15, 15a, 15b) to one another, by shifting relatively to these parts at least one part (annular body 50) of the control element coupling part (29), preferably contrary to the brake force direction.

5. Adjusting device according to claim 1, 2, 3 or 4, characterised in that the control element coupling part (24) of the control coupling (26, first rotating coupling 53) is loaded by a spring (43) loading it with the opening force.

6. Adjusting device according to claim 1, 2, 3 or 4, characterised in that the control coupling (26) is constructed to be geared with inclined tooth surfaces (28) producing the opening force under the torque load (Fig. 2, 3).

7. Adjusting device according to claim 5 or 6, characterised in that the control element has at least one control part (attachment 32) loaded if need be by the spring (43) loading it in the opening direction, and which can be coupled by means of a stop coupling (40) in the brake force direction (arrow 22) to the stop part (36), which control part can be coupled rotatably but axially non-displaceably to a coupling part (24), which is coupled axially displaceably, but relatively non-rotatably to the rotatable screw part (15, 14a), and which has a coupling profile (29) pointing in the brake force direction (arrow 22) forming the control coupling (26) with a counter-profile (29) on the one rod part (5, 5a) (Fig. 2, 4).

8. Adjusting device according to claim 7, characterised in that the control part has rods (33) arranged to be distributed uniformly over the circumference of the rod part (5, 5a), passing displaceably through the radial wall of a recess (35) of the one rod part, the recess being turned away from the brake force direction, said rods can be laid on the end turned away from the brake force direction (arrow 22) *via* the stop coupling (40) on an annular flange (39), projecting radially inwardly, of the sleeve-like stop part (36) that is mounted displaceably on the outer circumference of the one rod part (5, 5a), and which on the other end have attachments (32) projecting radially inwards, on which the coupling part (24) is supported rotatably, at least contrary to the brake force direction (arrow 22) *via* a ball-bearing (31), and in that the annularly constructed coupling part (24) is connected *via* a sliding profile to the rotatable screw part (15, 14a) penetrating it, whereby the sliding stroke of the coupling part (24) is limited in the brake force direction (arrow 22) by a stop (25) on the rotatable screw part (15, 14a) (Fig. 2, 4).

9. Adjusting device according to one or several of claims 1 to 6, characterised in that the control element is constructed as an annular body (50) surrounding the rotatable screw part (15b, 14a), which annular body is mounted non-rotatably but axially displaceably in a rod part (5) and which has a coupling profile pointing in the brake force direction (arrow 22), forming a first rotary coupling (53) with a first counter-profile on an annular intermediate part (52), in that the intermediate part (52) is supported *via* an axial bearing (55) in the brake force direction (arrow 22) against the one rod part (5), and in that the intermediate part (52) has a second counter-profile turned away from the brake force direction (arrow 22), which counter-profile, together with a coupling profile on the rotatable screw part (15b, 14a), forms a second rotary coupling (54) (Fig. 5, 6).

10. Adjusting device according to claim 9, characterised in that the axial bearing (55) supporting the intermediate part (52) is mounted axially displaceably on the rotatable screw part (15b, 14a) and in that the bearing part of the axial bearing (55) turned away from the intermediate part (52) can be laid in the brake force direction both against an annular flange (49) of the one rod part (5) and also against an annular flange (56) arranged on the rotatable screw part (15b, 14a) (Fig. 5, 6).

11. Adjusting device according to claim 10, characterised in that the annular flange (56) of the rod part in the brake force direction (arrow 22) is arranged flexibly on the one rod part (5) (Fig. 5, 6).

**Revendications:**

1. Dispositif automatique de rattrapage de jeu pour la course d'application de timoneries de véhicules, notamment sur rails, avec deux éléments de timonerie déplaçables télescopiquement entre eux à l'aide d'un vissage, et maintenus de manière à ne pas pouvoir tourner, éléments de timonerie dont au moins l'un (5) est réalisé à la manière d'un tube et est accouplé avec un moteur de force de freinage, éventuellement un cylindre de frein, fournissant une force de freinage, et dont l'autre (6) est accouplé à des éléments de timonerie (8) menant aux organes de freinage, le vissage comportant deux éléments de vissage constitués par un écrou (14) vissé sur une broche (15, 15a, 15b) à l'aide d'un filetage non autobloquant, et dont un élément de vissage (15 ou 14) est maintenu dans un élément de timonerie (5) de forme tubulaire de façon à pouvoir y tourner sans pouvoir se déplacer axialement, à l'exception de courses de fermeture de l'accouplement, et dont l'autre élément de vissage (14 ou 15) est maintenu de façon à ne pas pouvoir tourner et est relié de façon fixe à l'autre élément de timonerie (6), avec un dispositif de butée (37) présentant un jeu qui correspond, à l'état de desserrage, à une course d'application de consigne, lequel dispositif de butée est chargé, dans sa direction de fermeture dirigée dans le sens de la force de freinage, par un ressort et possède un élément de butée mobile (36), avec un accouplement de commande (26) assurant, à l'état fermé, l'accouplement non rotatif de l'élément de timonerie (5) avec l'élément de vissage tournant (15 ou 14), lequel accouplement de commande est, au moins lors de la charge par un couple de rotation, chargé dans le sens de l'ouverture, par une force d'ouverture faible par rapport au ressort (41) appartenant au dispositif de butée (37), et comporte un organe de commande (élément d'accouplement 24) chargé dans sa direction de fermeture par le ressort appartenant au dispositif de butée et par l'intermédiaire de l'élément de butée (36), avec un accouplement de rotation disposé entre ledit élément de tringlerie (5) et l'élément de vissage tournant (15 ou 14), transmettant la force de freinage et commutable en sens inverse de l'accouplement de commande (26), et avec un ressort de préarmement (13) bandé entre les deux éléments de timonerie et chargeant ledit élément de timonerie (5) à l'encontre du sens de la force de freinage, caractérisé par le fait qu'au moins un accouplement partiel de l'accouplement de commande (26, accouplements à rotation 53 et 54) est disposé de manière à être déchargé par la force de préarmement (13).

2. Dispositif de rattrapage de jeu selon la revendication 1, caractérisé par le fait que l'élément de vissage tournant (15, 15b, 14a) est soutenu par rapport audit élément de timonerie (5, 5a), dans la direction de la force de freinage (flèche 22), par l'intermédiaire d'un palier (21, 21a, palier axial 55) qui prend en charge la force de préarmement du ressort de préarmement (13) (fig. 2, 4, 5, 6).

3. Dispositif de rattrapage de jeu selon la revendication 2, caractérisé par le fait que le palier est réalisé sous la forme d'une bille qui est disposée entre l'élément de vissage tournant (15) et ledit premier élément de timonerie (5), coaxialement par rapport à cet élément (fig. 2).

4. Dispositif de rattrapage de jeu selon l'une des revendications 1, 2 ou 3, caractérisé par le fait qu'au moins le premier accouplement partiel (53) de l'accouplement de commande (26, accouplements tournants 53 et 54) est, dans le cas de la position relative axiale sensiblement constante dudit premier élément de tringlerie (5) et de l'élément de vissage tournant (15, 15a, 15b) entre eux et par le déplacement relatif par rapport à ces éléments d'au moins un élément (corps annulaire 50) de l'organe de commande (élément d'accouplement 24), agencé de manière à s'ouvrir de préférence dans le sens opposé à la direction de la force de freinage.

5. Dispositif de rattrapage de jeu selon l'une des revendications 1, 2, 3 ou 4, caractérisé par le fait que l'organe de commande (élément d'accouplement 24) de l'accouplement de commande (26, premier accouplement à rotation 53) est chargé par un ressort (43) qui le charge avec la force d'ouverture.

6. Dispositif de rattrapage de jeu selon l'une des revendications 1, 2, 3 ou 4, caractérisé par le fait que l'accouplement de commande (26) est réalisé avec une denture avec des flancs obliques des dents (8) qui produisent, sous la charge du couple de rotation, la force d'ouverture (fig. 2, 3).

7. Dispositif de rattrapage de jeu selon l'une des revendications 5 ou 6, caractérisé par le fait que l'organe de commande comporte au moins un élément de commande (appendice 32) éventuellement chargé par un ressort (43) exerçant sur lui une force dans le sens de l'ouverture et susceptible d'être accouplé, dans le sens de la force de freinage, avec l'élément de butée (36), par l'intermédiaire d'un accouplement de butée (40), lequel élément de commande (appendice 32) est susceptible de tourner, sans pouvoir être déplacé axialement, et est susceptible d'être accouplé avec un élément d'accouplement (24) déplaçable axialement sans pouvoir tourner et accouplé avec l'élément de vissage tournant (15, 14a), et qui comporte un profil d'accouplement (29) dirigé dans le sens de la force de freinage (flèche 22) et formant avec un profil antagoniste (29) sur ledit premier élément de timonerie (5, 5a) l'accouplement de commande (26) (fig. 2, 4).

8. Dispositif de rattrapage de jeu selon la revendication 7, caractérisé par le fait que l'élément de commande comporte des poussoirs (33) répartis uniformément sur la périphérie de l'élément de timonerie (5, 5a) et déplaçables à travers la paroi radiale d'un étranglement (35) dudit premier élément de timonerie, s'étendant en sens contraire de celui de la force de freinage, lesquels poussoirs sont susceptibles d'être appliqués, à l'extrémité opposée au sens de la force de freinage et par l'intermédiaire de l'accouplement de butée (40), contre un flasque annulaire (39) saillant radialement vers l'intérieur et appartenant à l'élément de butée (36) en forme de douille et coulissant sur la périphérie extérieure dudit premier élément de timonerie (5, 5a) et présentant par ailleurs des appendices radiaux (32) qui s'étendent vers l'intérieur et contre lesquels prend appui, avec rotation, au moins à l'encontre de la direction de la force de freinage (flèche 22), l'élément d'accouplement (24), par l'intermédiaire d'un palier (31), et que l'élément d'accouplement (24), qui est réalisé à la manière d'un anneau, est relié, par l'intermédiaire d'un profil de poussée, avec l'élément de vissage (15, 14a) tournant et le traversant, la réalisation étant telle que la course de déplacement de l'élément d'accouplement (24), dans la direction de la force de freinage (flèche 22), est limitée par une butée (25) prévue au niveau de l'élément de vissage tournant (15, 14a) (fig. 2, 4).

9. Dispositif de rattrapage de jeu selon l'une ou plusieurs des revendications 1 à 6, caractérisé par le fait que l'organe de commande est réalisé sous la forme d'un corps annulaire (50) entourant l'élément de vissage tournant (15b, 14a), lequel corps annulaire est monté, sans pouvoir tourner mais susceptible d'un déplacement axial, dans ledit premier élément de timonerie (5), et comportant un profil d'accouplement dirigé dans le sens de la force de freinage (flèche 22) et formant avec un premier profil antagoniste ménagé au niveau d'un élément intermédiaire annulaire (52), un premier accouplement de rotation (53), par le fait que l'élément initermédiaire (52) est appliqué, par l'intermédiaire d'un palier axial (55), dans la direction de la force de freinage (flèche 22), contre ledit premier élément de timonerie (5), et par le fait que l'élément intermédiaire (52) comporte un second profil antagoniste qui est en sens contraire de la direction de la force de freinage et qui forme, avec un profil d'accouplement prévu sur l'élément de vissage tournant (15b, 14a), un second accouplement de rotation (54) (fig. 5, 6).

10. Dispositif de rattrapage de jeu selon la revendication 9, caractérisé par le fait que le palier axial (55) qui constitue l'appui de l'élément intermédiaire (52) est monté, avec possibilité de déplacement axial, sur l'élément de vissage tournant (15b, 14a) et que l'élément de palier axial (55), qui est éloigné de l'élément intermédiaire (52), est susceptible d'être appliqué, dans la direction de la force de freinage, aussi bien contre un flasque annulaire (49) du premier élément de timonerie (5) que contre un flasque annulaire (56) disposé sur l'élément de vissage tournant (15b, 14a) (fig. 5, 6).

11. Dispositif de rattrapage de jeu selon la revendication 10, caractérisé par le fait que le flasque annulaire (56) de l'élément de timonerie est disposé, avec élasticité dans la direction de la force de freinage (flèche 22), au niveau du premier élément de timonerie (5) (fig. 5, 6).

Fig. 1

0 058 833

Fig. 2

Fig. 3

Fig. 4

Fig. 5

Fig. 6

50 53 51 57

5

0 058 833

25

14a 54 52 55 49 56 15a